Europäisches Patentamt

European Patent Office

Office européen des brevets

(19)

(11) Publication number: **0 467 546 A2**

## EUROPEAN PATENT APPLICATION

(12)

(21) Application number: **91305885.5**

(22) Date of filing: **28.06.91**

(51) Int. Cl.5: **G06F 9/46**

(30) Priority: **18.07.90 GB 9015779**

(43) Date of publication of application:
**22.01.92 Bulletin 92/04**

(84) Designated Contracting States:
**DE FR GB IT NL**

(71) Applicant: **INTERNATIONAL COMPUTERS LIMITED**
**ICL House**
**Putney, London, SW15 1SW(GB)**

(72) Inventor: **Carter, Clive Ronald**
**41 Basbow Lane**
**Bishops Stortford, Herts CM23 2NA(GB)**
Inventor: **Daniells, Martin Brent**
**10 Fairfax Mead**
**Chelmsford, Essex CM2 6UG(GB)**
Inventor: **Tang, Cho**
**Stump House**
**Hemmall Street, Epping(GB)**

(74) Representative: **Guyatt, Derek Charles Patents and Licensing International Computers Limited et al**
**Six Hills House London Road**
**Stevenage, Herts, SG1 1YB(GB)**

(54) Distributed data processing systems.

(57) A distributed data processing system comprises a plurality of data processing nodes interconnected by a data communications network. Each node runs a plurality of agents some of which are client agents and some of which are server agents which provide services for the client agents. Each node has a message handler for sending request messages from the client agents to the server agents and for returning responses from the server agents to the client agents. At least some of the server agents replicated so as to provide a plurality of instances of the same service. In the event that a server agent does not respond to a request message from a client agent, the message handler sends the request message to another server agent providing an alternative instance of the same service. This provides resilient against failure of a particular instance of a service.

EP 0 467 546 A2

## Background to the invention

This invention relates to distributed data processing systems. More specifically, the invention is concerned with a data processing system comprising a plurality of data processing nodes interconnected by a data communications network.

The software for such a system comprises, in general, a number of applications programs (hereinafter referred to as agents) which run on the individual processing nodes. In such a system, an agent running on one node may send a request for service to another agent, running on the same or a different node. The agent that makes the request is hereinafter referred to as the client agent, and the agent which handles the request is referred to as the server agent.

"Implementing Remote Procedure Calls" by Birrell & Nelson, ACM Transactions on Computer Systems, February 1984 describes a mechanism by which a client agent in one node can send a request to a server agent in another node A problem with known systems of this type is that, if one node fails, all the server agents on that node will become unavailable, and hence the system may become inoperative.

The object of the present invention is to provide a distributed data processing system in which this problem is alleviated or overcome.

## Summary of the invention

According to the invention there is provided a distributed data processing system comprising a plurality of data processing nodes interconnected by a data communications network, wherein each node runs a plurality of agents some of which are client agents and some of which are server agents which provide services for the client agents, and wherein each node has a message handler for sending request messages from the client agents to the server agents and for returning responses from the server agents to the client agents, characterised in that at least some of the server agents are replicated so as to provide a plurality of instances of the same service, and in the event that a server agent does not respond to a request message from a client agent, the message handler sends the request message to another server agent providing an alternative instance of the same service.

## Brief description of the drawings

Figure 1 is an overall block diagram of a distributed data processing system.

Figure 2 shows a message handling mechanism.

## Description of an embodiment of the invention

One data processing system in accordance with the invention will now be described by way of example with reference to the accompanying drawings.

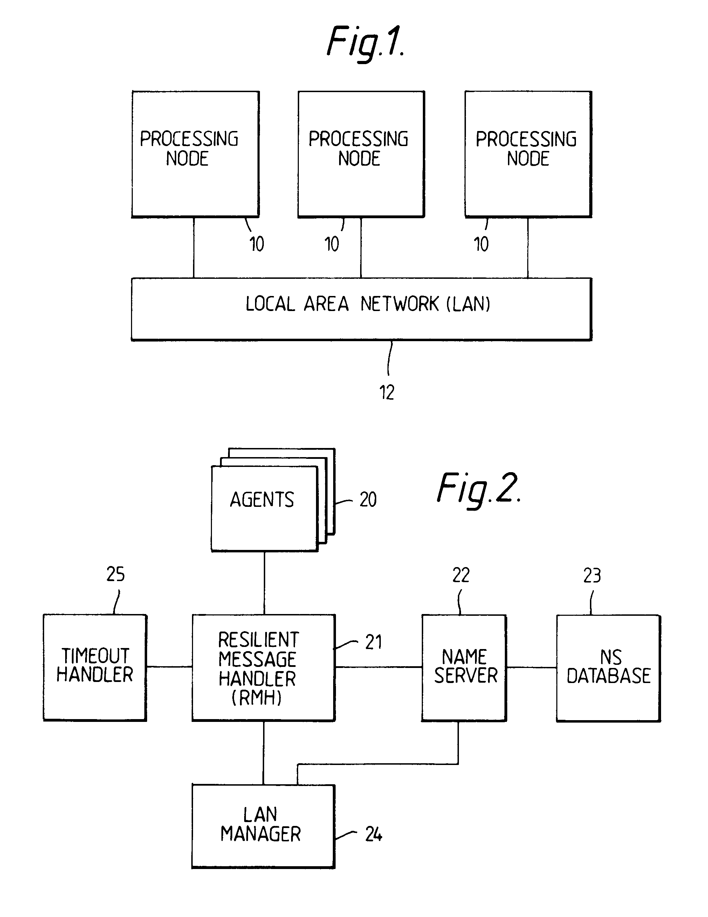

Referring to Figure 1, the system comprises a plurality of processing nodes 10, interconnected by a local area network (LAN 12). The nodes may be, for example, personal computer workstations, point-of-sale terminals, or mainframe computers. The LAN may be conventional.

Referring now to Figure 2, each node contains a number of agents 20 (application programes) which perform the useful workload of the system. Some of these are server agents, which provide services for client agents. For example, a server agent may provide a database management service.

The server agents, and their associated data, are replicated, so that there exist a plurality of identical copies of the server agent for each service type. These replicated copies are referred to as instances of the service. The instances in general reside in separate nodes of the system. For example, separate instances of a database service may be held in two or more different nodes, along with separate copies of the database.

The purpose of this replication, as will be shown is to provide resilience against failure. For example, if the node containing one instance of a particular service fails, another instance of that service can be accessed from another node.

Each node also contains a least one Resilient Message Handler program (RMH) 21. The purpose of the RMH is to provide a transparent, resilient, remote procedure call facility, allowing client agents to access server agents which may reside in the same or other nodes of the system.

The RMH has a timeout handler 25 associated with it, for timing various response periods, as will be described.

Each node also has at least one Name Server (NS) program 22. This provides an interface to an NS database 23, containing information on instances of services that are available in the system. Each Name Server has its own local copy of the NS database, and those copies are kept consistent and up-to-date by messages passed between the Name Servers.

Each node also contains a LAN manager program 24, which provides an interface to the LAN 12, allowing an RMH or Name Server in any node to send messages to an RMH or Name Server in any other node.

All messages sent over the LAN from one RMH to another are acknowledged by the receiving RMH. If an acknowledgement is not received within a predetermined time out period T1, equal to the maximum expected transmission time, the transmission is re-tried, up to a predetermined maximum number of times.

The agents 20 interface with the RMH by means of a set of function calls. These function calls are as follows.

EXPORT

This function call is used by a server agent to advertise its willingness to provide a service to client agents.

The call includes the following parameters Service type -

the name of the service provided by the server agent.

Attribute list -

a set (possibly empty) of attributes associated with the server agents.

Service time -

the maximum time that the server agent expects to take in servicing a request.

When the RMH receives the EXPORT call, it instructs the Name Server 22 to create an export record in the NS database 23 for the server agent. This record includes the identity of the server agent, its location, the service type, attributes, and the expected service time.

The Name Server 22 in turn communicates this record to all the other Name Servers in the system by means of messages over the LAN 12, to ensure that all copies of the NS database are kept up-to-date. Each copy of the NS database contains a "last changed" timestamp, which is set to indicate the time at which the last update was made to the database.

The RMH then assigns a logical channel to this server agent, and creates a corresponding channel record. The channel record includes the expected maximum service time, and a pointer to the NS database entry for this server. The channel record also acts as a buffer for temporarily storing a queue of request messages for the server.

Finally, the RMH returns a pointer, referred to as the "export handle", to the server agent. This identifies the logical channel assigned to the server by the RMH, and can be used by the server to refer to the channel in subsequent operations.

Whenever the RMH receives a request message for a server agent, from a client agent, it places the message in the queue in the appropriate channel buffer, and returns an acknowledgement to the client agent.

GET REQUEST

This function call is used by a server agent to indicate that it is now ready to process the next request message in its queue/ If no message is queued, the call is blocked until a message is received.

The call includes the following parameters:

Export handle -

the pointer to the logical channel assigned to this server when it made the EXPORT call.

request buffer =

a pointer to a buffer into which the RMH is to place the request message.

When the RMH receives this call, it gets the next request Message (if any) from the queue to the relevant channel record, and passes this message to the server agent by placing it in the request buffer. The RMH also returns a pointer, referred to as the "transaction handle", which is used as a local reference for associating the request with the subsequent response.

The RMH then starts a timeout T2, equal to the expected maximum service time of the server agent, as specified by the channel record. If the timeout expires before the server produces a response to the request message, the RMH sends a reply message to the client agent, indicating that the request has failed. In this case, the RMH also instructs the local Name Server 22 to mark the server agent as "out of service" in the NS database. The Name Server updates its local copy of the NS database and also relays the information to the other Name Server so that they can update their local copies. The "last changed" timestamp in the NS database is also updated.

PUT RESPONSE

A Server agent uses this function call to instruct the RMH to pass a response message back to the client agent.

The call includes the following parameters:

export handle -

the pointer to the logical channel assigned to this server when it made the EXPORT call.

transaction handle -

the local reference which is used to associate this response with the corresponding request.

response buffer -

a pointer to a buffer containing the response message which is to be passed back to the client agent.

status -

the status of the response returned by the server (OK, FAIL, NOT AVAILABLE or DEGRADED).

The significance of the status parameter is as follows:

OK - The server agent has successfully actioned the request.

FAIL -
The server agent could not action the request because of an error condition.
NOT AVAILABLE -
The server agent could not find the necessary information to perform the request. For example, in the case of a database server, this server may have only a partial copy of the database.
DEGRADED -
The service provided by this server agent may be out-of-date or inconsistent.

The RMH reads the response message from the response buffer and returns it to the RMH of the client agent that made the request (by way of the LAN 12) if the client agent is in a different node), along with the status information. As will be described later, if the status is FAIL, NOT AVAILABLE or DEGRADED, the RMH of the client agent may then try another server, providing an alternative instance of the same service.

WITHDRAW

A server uses this function call to indicate to the rest of the system that it is no longer available to provide the service.

This call contains as a parameter the export handle, identifying the logical channel assigned to this server.

When the RMH receives this call, it deletes the channel record and cancels the logical channel identified by the export handle.

The RMH also instructs the Name Server 22 to delete the export record for this server in the NS database. The Name Server 22 communicates this information to the other Name Servers in the system, so that they can update their copies of the NS database.

A server agent that has been marked "out of service" for any reason, and which wishes to return to service, must first made a WITHDRAW call, and then make a fresh EXPORT call.

CREATE BINDING

This function call is used by a client agent to indicate that it wishes to bind (i.e. form a logical connection) to a specified service, in preparation for sending one or more request messages to that service. A client may make multiple bindings to the same or different services.

The call includes the following parameters:

service type -     the name of the service to which the client agent wishes to bind.
constraints -      a set (possibly empty) of attributes that must be possessed by any server agent which is to handle request messages for this service.

When the RMH receives this call, it instructs the Name Server 22 to search its NS database 23 for export records whose service types match the service type parameter of the call, and whose attributes match the constraints parameter of the call. In other words, the Name Server identifies all server agents that have advertised their willingness to provide the required service, and that satisfy the constraints imposed by the client agent.

If the Name Server finds any export records that match the requirements, it returns a list of the matching server agents to the RMH. Otherwise, it returns an error code. The server agents are listed in order of preference of access. If there is a local server agent (i.e. one that resides in the same node as the client agent), this is placed at the head of the list.

If a match was found, the RMH assigns a logical channel to this binding, and creates a corresponding channel record.

The channel record includes the following information:

service type -     the name of the service.
constraints -      the constraints specified by the call
last update -      a timestamp indicating the time at which the NS database was accessed.
serve list -       the list of matching server agents.

Finally, the RMH returns a pointer, referred to as the "import handle", to the client agent. This identifies the logical channel assigned to the binding, and is used by the client agent to refer to the channel in subsequent operations.

CALL

This call is used by a client agent when it wishes to pass a request message to a service for which it has previously created a binding.

The call includes the following parameters:
import handle -
the pointer to the logical channel assigned to the binding.
type -
a pointer to a buffer containing the request message.
response buffer -
a pointer to a buffer into which the response (if any) will be placed.

The meaning of the type parameter is as follows"
ACCESS ANY -
indicates that the request message is to be passed to any one of the bound server agents which provide the required service.

ACCESS ALL -

means that the request message is to be passed to all the bound server agents providing this service.

Typically, an ACCESS ANY request would be used for a database query transaction, and an ACCESS ALL request would be used for a database update transaction.

When the RMH receives this call, it instructs the Name Server 22 to check whether the last update timestamp of the relevant channel matches the last changed timestamp of the NS database. If the last changed timestamp is newer, this means that the NS database has been updated since the binding was performed. In this case the Name Sever repeats its search for matching server agents (as described above for the CREATE BINDING call) and returns a list to the RMH. The RMH then updates the list of servers and the last update timestamp in the channel record.

The RMH now sets up a logical communication path with each of the server agents on the list, if such path does not already exist

The next action of the RMH depends on the access type - ACCESS ANY or ACCESS ALL.

In the case of an ACCESS ANY call, the RMH sends the request message (from the request buffer) to the RMH of the first server on the list. The message is sent by way of the LAN if the server resides in a different node. When the RMH gets an acknowledgement that the message has been received, it starts a timeout T2+, equal to the expected maximum service time for the server agent, plus an allowance for the delay in message transfer between the client and server.

If a response is received within the timeout period T2+, and the status of the message is OK, the message is placed in the response buffer and the client agent is informed that the response is available.

If the timeout T2+ expires before a response message is received, or if the response status is FAIL or NOT AVAILABLE, the RMH selects the next server (if any) on the list, and sends the request message to that server. Also, in the case of a FAIL, the RMH instructs the Name Server to mark the failed server agent as "out of service". If there are no more servers on the list, the RMH instructs the Name Server to mark the failed server agent as "out of service". If there are no more servers on the list, the RMH returns a failure indication to the client agent. Otherwise, the degraded response is passed to the client agent, with an indication that it is degraded.

Thus, it can be seen that if one instance of a service fails the RMH attempts to access alternative instances of that service. This provides resilience to failures, allowing the system to continue normal operation. The action of the RMH is transparent, in that the client agent is not aware of the failure, or of the fact that an alternative instance of the service has been used. Normally alternative instances of a service will be resident on different nodes, so that the system provides resilience to failure of a node.

In the case of an ACCESS ALL call, the RMH sends the request message to the RMHs of all the servers on the list, and waits for responses from all those servers. It then arbitrarily selects one of those responses and returns it to the client agent.

## TERMINATE BINDING

A client agent uses this call to indicate that it no longer wishes to use a service and wishes to terminate the binding to that service.

The call contains the import handle which identifies the logical channel assigned to this binding.

In response to this call, the RMH erases the channel record for this binding. The RMH also terminates any logical communication paths that it has established to server agents listed in the channel record.

## Claims

1. A distributed data processing system comprising a plurality of data procesdsing nodes (10) interconnected by a data communications network (12), wherein each node runs a plurality of agents (20)some of which are client agents and some of which are server agents which provide services for the client agents, and wherein each node has a message handler (21) for sending request messages from the client agents to the server agents and for returning responses from the server agents to the client agents, characterised in that at least some of the server (20) agents are replicated so as to provide a plurality of instances of the same service, and in the event that a server agent does not respond to a request message from a client agent, the message handler (21) sends the request message to another server agent providing an alternative instance of the same service.

2. A system according to claim 1 wherein, server agents providing alternative instances of a service run on different nodes.

3. A system according to claim 1 or 2, including means for maintaining a distributed database comprising information about server agents that are prepared to provide services to client agents.

4. A system according to claim 3 wherein, when a server agent is prepared to provide a service, it makes a call to the message handler, which then updates the database to include this server.

5. A system according to claim 3 or 4 wherein when a client agent initially requires to use a service, it makes call to the message handler, which then initiates a search through the database for server agents which provide the required service, and stores a list of those agents.

6. A system according to claim 5 wherein, whenever a client agent requires to use a service, the message handler dynamically updates the list of server agents, to ensure that the list always represents the current set of matching server agents despite the emergence of some new server instances and the departure or failure of others.

# Fig.1.

# Fig.2.